(19) Europäisches Patentamt

European Patent Office

Office européen des brevets

(11) **EP 1 153 900 A2**

(12) **EUROPEAN PATENT APPLICATION**

(43) Date of publication:
**14.11.2001 Bulletin 2001/46**

(51) Int Cl.[7]: **C04B 35/26**, C04B 35/645, H01F 41/02

(21) Application number: **01304165.2**

(22) Date of filing: **09.05.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **11.05.2000 JP 2000138325**

(71) Applicants:
• **National Institute of Advanced Industrial Science and Technology**
  **Tokyo 100-8901 (JP)**
• **Toda Kogyo Corporation**
  **Hiroshima-shi, Hiroshima-ken (JP)**

(72) Inventors:
• **Tabuchi, Mitsuharu**
  **Suita-shi, Osaka-fu (JP)**
• **Takeuchi, Tomonari**
  **Ikeda-shi, Osaka-fu (JP)**
• **Kageyama, Hiroyuki**
  **Toyonaka-shi, Osaka-fu (JP)**
• **Nakamura, Tatsuya**
  **Himeji-shi, Hyogo-ken (JP)**
• **Okano, Yoji**
  **Higashihiroshima-shi, Hiroshima-ken (JP)**

(74) Representative: **Woods, Geoffrey Corlett**
  **J.A. KEMP & CO.,**
  **Gray's Inn,**
  **14 South Square**
  **London WC1R 5LX (GB)**

(54) **Process for producing magnetoplumbite-type ferrite sintered magnet**

(57) A process for producing a sintered magnet composed of ferrite particles with magnetoplumbite structure exhibiting a large magnetic flux density and a high coercive force, at a relatively low temperature for a short period of time by filling ferrite particles with magnetoplumbite structure produced by a wet-method, in a mold; and supplying an electric current to the ferrite particles with magnetoplumbite structure filled in the mold under a pressure.

EP 1 153 900 A2

**Description**

The present invention relates to a process for producing a magnetoplumbite-type ferrite sintered magnet, and more particularly, to a process for producing a magnetoplumbite-type ferrite sintered magnet (sintered magnet composed of ferrite particles with magnetoplumbite structure) having a large density and a small crystallite size, at a low temperature for a short period of time.

The sintered magnet composed of ferrite particles with magnetoplumbite structures have advantages such as good chemical stability and low production costs and, therefore, have been widely used in various applications such as motors, electronic devices and the like.

With recent tendency toward miniaturization and light weight of these devices, it has been required to reduce the size of the magnetoplumbite-type ferrite sintered magnet used therein. For this reason, it has been demanded to provide such a magnetoplumbite-type ferrite sintered magnet exhibiting higher magnetic properties, especially a larger magnetic flux density Bs and a higher coercive force Hc. To meet the demand, it is necessary to sinter magnetoplumbite-type ferrite particles into a high-density body since the magnetic flux density Bs of the magnetoplumbite-type ferrite sintered magnet depends on the density thereof.

Conventionally, the magnetoplumbite-type ferrite sintered magnet has been produced by the following method. First, raw materials such as oxides and carbonates containing metal elements as constituents of ferrite particles with magnetoplumbite structure, are mixed together. The resultant mixture is calcined in an electric furnace and then pulverized. The obtained particles are wet-molded under a magnetic field. Then, the obtained molded product is sintered in air at a temperature of 1180 to 1,230°C to produce the magnetoplumbite-type ferrite sintered magnet (Japanese Patent Application Laid-Open (KOKAI) No. 10-149910(1998)).

However, in the above-described conventional production method, when the particles are sintered at such a high temperature, the particles undergo excessive growth, so that a crystallite size thereof increases beyond the critical single domain particle diameter (about 0.9 µm). As a result, the obtained sintered magnet is deteriorated in coercive force. In order to prevent the excessive growth of the particles, it has been attempted to conduct a method of adding $SiO_2$ or $CaCO_3$ as a growth inhibitor to the particles, pulverizing the particles and then sintering the pulverized particles to form a sintered magnet. The addition of the growth inhibitor is effective to prevent the growth of particles and improve the coercive force of the obtained sintered magnet. However, since $SiO_2$ or $CaCO_3$ added as the growth inhibitor is a non-magnetic substance, the obtained sintered magnet tends to be deteriorated in magnetic flux density Bs.

Specifically, in the production of the magnetoplumbite-type ferrite sintered magnet, it is difficult to enhance both the magnetic flux density and coercive force thereof, because the improvement of one property inevitably causes deterioration of the other property. Such a contradictory relation between these properties is one reason for hindering the reduction in size of the magnetoplumbite-type ferrite sintered magnet.

As a result of the present inventors' earnest studies to solve the above problem, it has been found that by sintering ferrite particles with magnetoplumbite structure under pressure while applying an electric current thereto, the obtained sintered magnet composed of ferrite particles with magnetoplumbite structure can exhibit a large magnetic flux density and a high coercive force. The present invention has been attained based on the above finding.

An object of the present invention is to provide a process for producing a sintered magnet composed of ferrite particles with magnetoplumbite structure exhibiting a larger magnetic flux density and a high coercive force, at a relatively low temperature for a short period of time.

To accomplish the aim, in a first aspect of the present invention, there is provided a process for producing a sintered magnet composed of ferrite particles with magnetoplumbite structure, comprising:

filling ferrite particles with magnetoplumbite structure produced by a wet-method, in a mold; and
supplying an electric current through the ferrite particles with magnetoplumbite structure filled in mold under a pressure to sinter the ferrite particles with magnetoplumbite structure.

In a second aspect of the present invention, there is provided a process for producing a sintered magnet composed of ferrite particles with magnetoplumbite structure, comprising:

filling ferrite particles with magnetoplumbite structure produced by a wet-method, in a mold; and
supplying an electric current of 100 to 2,000 A at a voltage of 1 to 10 V to the ferrite particles with magnetoplumbite structure filled in the mold under a pressure of 5 to 500 MPa when measured at the surface of a sample compact in the mold, to sinter the ferrite particles with magnetoplumbite structure.

In a third aspect of the present invention, there is provided a process for producing a sintered magnet composed of ferrite particles with magnetoplumbite structure, comprising:

filling in a mold, ferrite particles with magnetoplumbite structure produced by a wet-method, which have an average particle diameter of 0.1 to 0.9 μm, and a composition represented by the formula:

$$SrO \cdot nFe_2O_3$$

wherein a part of Sr may be substituted with Ba, Pb, La, Nd or Pr; a part of Fe may be substituted with Ni, Mn, Ti, Co, Zn, Al or Sn; and n is 5.5 to 6.2; and

supplying an electric current of 500 to 1,500 A at a voltage of 1 to 5 V to the ferrite particles with magnetoplumbite structure while applying thereto a pressure of 10 to 200 MPa when measured at the surface of a sample compact in the mold, to sinter the ferrite particles with magnetoplumbite structure.

The present invention will now be described in detail below. The ferrite particles with magnetoplumbite structure used in the present invention have a composition represented by the formula:

$$SrO \cdot nFe_2O_3$$

wherein a part of Sr may be substituted with Ba, Pb, La, Nd or Pr; a part of Fe may be substituted with Ni, Mn, Ti, Co, Zn, Al or Sn; and n is 5.5 to 6.2.

The upper limit of Sr amount substituted with Ba, Pb, La, Nd or Pr is preferably 70 mol%, more preferably 50 mol %, and the upper limit of Fe amount substituted with Ni, Mn, Ti, Co, Zn, Al or Sn is preferably 40 mol%, more preferably 30 mol%. In the consideration of the improvement of the magnetization value, it is preferred to substitute more than 0 and not more than 40 mol% of Sr with La and to substitute more than 0 and not more than 3.3 mol% of Fe with Zn.

When the composition of the ferrite particles with magnetoplumbite structure does not satisfy the above-specified formula, it is difficult to obtain the aimed sintered magnet composed of ferrite particles with magnetoplumbite structure having a large magnetic flux density and a high coercive force.

The ferrite particles with magnetoplumbite structure may be produced by a known wet-method, more specifically, by mixing a strontium compound and an iron compound together in a solution so as to constitute the above-specified composition; adding sodium hydroxide, potassium hydroxide, etc. to the mixture, thereby causing $Sr^{2+}$ ions and $Fe^{3+}$ ions to be precipitated; and then heating the resultant precipitates in an autoclave at about 200°C for subjecting the particles to hydrothermal treatment. Alternatively, there may also be used particles obtained by calcining the precipitates of $Sr^{2+}$ ions and $Fe^{3+}$ ions. For example, there may be used fine ferrite particles with magnetoplumbite structure obtained by mixing a strontium compound and an iron compound together in a solution so as to constitute the above-specified composition; adding sodium carbonate, potassium carbonate, etc. to the mixture, thereby causing $Sr^{2+}$ ions and $Fe^{3+}$ ions to be precipitated; and then calcining the resultant precipitates at a temperature of about 700 to 1,000°C.

The ferrite particles with magnetoplumbite structure produced by the wet-method according to the present invention have an average particle diameter of usually not more than 0.9 μm, preferably 0.1 to 0.9 μm. When the average particle diameter is more than 0.9 μm, the obtained sintered magnet has a crystallite size larger than its critical single domain particle diameter, so that the coercive force thereof tends to be deteriorated. The average thickness of the ferrite particles with magnetoplumbite structure produced by the wet-method according to the present invention is preferably 0.005 to 0.6 μm, more preferably 0.01 to 0.45 μm.

In order to prevent the obtained sintered magnet composed of ferrite particles with magnetoplumbite structure using the particles produced by the wet-method from being deteriorated in coercive force or the like, a growth inhibitor such as $SiO_2$ and/or $CaCO_3$ may be mixed with the ferrite particles with magnetoplumbite structure using a ball mill, etc. before sintering. The amount of $SiO_2$ added is preferably not more than 2 % by weight, more preferably not more than 1 % by weight based on the weight of the ferrite particles with magnetoplumbite structure. The amount of $CaCO_3$ added is preferably not more than 2.5 % by weight, more preferably not more than 1.5 % by weight based on the weight of the ferrite particles with magnetoplumbite structure. The amount of mixture of $SiO_2$ and $CaCO_3$ added is preferably not more than 4.5 % by weight, more preferably not more than 2.5 % by weight based on the weight of the ferrite particles with magnetoplumbite structure. The preferable weight ratio of $CaCO_3$ to $SiO_2$ in the mixture thereof 1:1 to 4:1, more preferably 1:1 to 3:1.

The ferrite particles with magnetoplumbite structure produced by the wet-method are then filled in a mold, and supplied with an electric current under pressure, thereby sintering the ferrite particles with magnetoplumbite structure. In general, this method is called "spark plasma sintering method". As materials of the mold used in the above sintering method, graphite or the like may be used because of a high electrical conductivity, a low chemical reactivity with ferrite and inexpensiveness thereof.

The pressure applied to the ferrite particles with magnetoplumbite structure filled in the mold is usually 5 to 500 MPa, preferably 10 to 200 MPa when measured at the surface of a sample compact in the mold. When the applied pressure is less than 5 MPa, it is difficult to sinter the ferrite particles with magnetoplumbite structure. As a result, the obtained sintered magnet has a density of less than 5,000 $kg/m^3$, resulting in insufficient strength thereof. In addition, the sintered magnet composed of ferrite particles with magnetoplumbite structure having such a low density fails to show a large magnetic flux density. The pressure of 500 MPa is sufficient to sinter the ferrite particles with magnetoplumbite structure. Therefore, in the consideration of economy, it is unnecessary to use such a large pressure exceeding 500 MPa.

The electric current applied to the ferrite particles with magnetoplumbite structure is usually 100 to 2,000 A, preferably 500 to 1,500 A. When the electric current applied is less than 100 A, it is difficult to sinter the ferrite particles with magnetoplumbite structure. As a result, the obtained sintered magnet has a density of less than 5,000 $kg/m^3$, resulting in insufficient strength thereof. In addition, the sintered magnet composed of ferrite particles with magneto-lumbite structure having such a low density fails to show a large magnetic flux density. The sintering of the ferrite particles with magnetoplumbite structure can sufficiently proceed by applying the electric current of 2,000 A thereto. Therefore, in the consideration of economy, it is unnecessary to apply such a large electric current exceeding 2,000 A.

The voltage applied to the ferrite particles with magnetoplumbite structure is usually 1 to 10 V, preferably 1 to 5 V. When the voltage applied is less than 1 V, it is difficult to sinter the ferrite particles with magnetoplumbite structure. As a result, the obtained sintered magnet has a density of less than 5,000 $kg/m^3$, resulting in insufficient strength thereof. In addition, the sintered magnet composed of ferrite particles with magnetoplumbite structure having such a low density fails to show a large magnetic flux density. The sintering of the ferrite particles with magnetoplumbite structure can sufficiently proceed by applying the voltage of 10 V thereto. Therefore, in the consideration of economy, it is unnecessary to apply such a large voltage exceeding 10 V.

The sintering temperature is usually 850 to 1,050°C, preferably 875 to 1,025°C. When the sintering temperature is less than 850°C, it is difficult to sinter the ferrite particles with magnetoplumbite structure. As a result, the obtained sintered magnet has a density of less than 5,000 $kg/m^3$, resulting in insufficient strength thereof. In addition, the sintered magnet composed of ferrite particles with magnetoplumbite structure having such a low density fails to show a large magnetic flux density. When the sintering temperature is more than 1,050°C, the growth of the ferrite particles with magnetoplumbite structure proceeds excessively, so that the crystallite size thereof exceeds the critical single domain particle diameter (about 0.9 $\mu$m), resulting in deteriorated coercive force of the obtained sintered magnet.

The sintering time is usually 1 to 15 minutes, preferably 1 to 10 minutes. When the sintering time is less than one minute, it is difficult to sinter the ferrite particles with magnetoplumbite structure. As a result, the obtained sintered magnet has a density of less than 5,000 $kg/m^3$, resulting in insufficient strength thereof. In addition, the sintered magnet composed of ferrite particles with magnetoplumbite structure having such a low density fails to show a large magnetic flux density. The sintering time of 15 minutes is sufficient to sinter the ferrite particles with magnetoplumbite structure. Therefore, in the consideration of economy, it is unnecessary to use such a long sintering time beyond 15 minutes.

The sintering treatment may be usually conducted in a non-reducing atmosphere, preferably in an oxidative atmosphere. The pressure of the specific atmosphere during the sintering treatment is not particularly restricted, and it is preferred that the sintering treatment be conducted under atmospheric pressure.

When the ferrite particles with magnetoplumbite structure are sintered by the above spark plasma sintering method, it is possible to obtain the aimed sintered magnet composed of ferrite particles with magnetoplumbite structure capable of exhibiting a large density and a small crystallite size as well as a large magnetic flux density and a high coercive force. More specifically, in the case of the above spark plasma sintering method used in the present invention, it is suggested that when applying the above-specified amount of electric current to the ferrite particles with magnetoplumbite structure filled in the mold under pressure, the spark plasma is generated within the mold and directly acts between the particles, unlike the conventional method in which a molded product composed of the ferrite particles with magnetoplumbite structure is sintered in an electric furnace such as Fisher furnace at a temperature of more than 1,080°C for not less than 30 minutes. Thus, in the present invention, since the ferrite particles with magnetoplumbite structure are sintered at a relatively low temperature for a short period of time, the ferrite particles with magnetoplumbite structure can be prevented from suffering from excessive growth. As a result, it becomes possible to obtain a sintered magnet composed of ferrite particles with magnetoplumbite structure having a crystallite size not more than the critical single domain particle diameter (0.9 $\mu$m), a density of not less than 5,000 $kg/m^3$, preferably 5,000 to 5,150 $kg/m^3$, a magnetization value of 60 to 70 $Am^2/kg$, a coercive force of 100 to 400 kA/m and a magnetic flux density of 350 to 450 mT.

In the present invention, since the ferrite particles with magnetoplumbite structure are sintered together at a relatively low temperature for a short period of time by the spark plasma sintering method, the growth of the ferrite particles with magnetoplumbite structure can be effectively inhibited. As a result, it is possible to obtain the aimed sintered magnet composed of ferrite particles with magnetoplumbite structure having a small crystallite size and a high density as well as a large magnetic flux density and a high coercive force.

EXAMPLES

The present invention will be described in more detail by reference to the following examples. However, these examples are only illustrative and not intended to limit the present invention thereto.

(1) The shape of the ferrite particles with magnetoplumbite structure was observed by a field emission-type scanning electron microscope "S-800" manufactured by Hitachi Limited.

(2) The magnetization value σs and coercive force Hc of the ferrite particles with magnetoplumbite structure were measured by a vibratiin sample megnetometer "BHV-35" manufactured by Riken Denshi Co., Ltd. by applying a magnetic field of 1,193 kA/m (15 kOe) thereto. The sample measured each had a disk-like shape having a diameter of 7 mm and a thickness of 3 mm. The magnetic field was applied in the direction parallel to the disk flat surface.

(3) The density 'd' of the sintered magnet composed of ferrite particles with magnetoplumbite structure was measured by Archimedes method.

(4) The magnetic flux density Bs of the sintered magnet composed of ferrite particles with magnetoplumbite structure was calculated from the above-measured magnetization value σs and density d according to the following formula:

$$Bs = 4\pi \times \sigma s \times d$$

Production Example 1:

An aqueous mixed solution containing $SrCl_2 \cdot 6H_2O$ and $Fe(NO_3)_3 \cdot 9H_2O$ was prepared such that the molar ratio of $Fe^{3+}$ to $Sr^{2+}$ was 11.4:1. An aqueous NaOH solution was then added to the aqueous mixed solution in an amount not less than that required for neutralizing the Sr and Fe compounds so as to allow $Sr^{2+}$ ions and $Fe^{3+}$ ions to be precipitated. The obtained precipitates were treated in an autoclave at 200°C under 20 atm for 5 hours. The resultant reaction product was washed with water, filtered out and then dried, thereby obtaining ferrite particles with magnetoplumbite structure. It was confirmed that the thus obtained ferrite particles with magnetoplumbite structure had an average particle diameter of 0.25 μm and an average thickness of 0.08 μm.

Production Example 2:

An aqueous mixed solution containing $SrCl_2 \cdot 6H_2O$ and $Fe(NO_3)_3 \cdot 9H_2O$ was prepared such that the molar ratio of $Fe^{3+}$ to $Sr^{2+}$ was 11.4:1. $Na_2CO_3$ was added to the aqueous mixed solution in an amount not less than that required for neutralizing the Sr and Fe compounds so as to allow $Sr^{2+}$ ions and $Fe^{3+}$ ions to be precipitated. The obtained precipitates were calcined in air at 1,000°C for 3 hours, thereby obtaining ferrite particles with magnetoplumbite structure. It was confirmed that the thus obtained ferrite particles with magnetoplumbite structure had an average particle diameter of 0.5 μm and an average thickness of 0.2 μm.

Example 1:

The ferrite particles with magnetoplumbite structure obtained in Production Example 1 were filled in a graphite mold and pressurized to 40 MPa. While keeping the pressurized condition, an electric current of 800 A (voltage applied: 3 V) was supplied to the particles filled in the mold to generate an electric spark therebetween, thereby heating the particles to 900°C for about 5 minutes. After keeping the temperature of 900°C for 5 minutes, the particles were allowed to stand for natural cooling. The obtained sintered product was held in air at 800°C for 2 hours to remove carbon adhered to the surface thereof.

It was confirmed that the thus obtained sintered magnet composed of ferrite particles with magnetoplumbite structure had a density of 5,050 kg/m$^3$, a magnetization value of 61.4 Am$^2$/kg, a coercive force of 279 kA/m and a magnetic flux density of 390 mT.

Examples 2 to 6 and Comparative Examples 1 to 4:

The same procedure as defined in Example 1 was conducted except that composition of ferrite particles with magnetoplumbite structure, sintering temperature, sintering time and amount of growth inhibitor added were varied, thereby producing a sintered magnet composed of ferrite particles with magnetoplumbite structure.

Production conditions are shown in Tables 1 and 3, and various properties of the obtained sintered magnets are shown in Tables 2 and 4.

Table 1

| Examples and Comparative Examples | Production conditions | |
|---|---|---|
| | Composition | Production method of particles |
| Example 1 | $SrO \cdot 5.7[Fe_2O_3]$ | Production Example 1 |
| Example 2 | $SrO \cdot 5.6[Fe_2O_3]$ | Production Example 1 |
| Example 3 | $SrO \cdot 5.8[Fe_2O_3]$ | Production Example 1 |
| Example 4 | $(Sr_{0.8}Ba_{0.2})O \cdot 6.1[Fe_2O_3]$ | Production Example 2 |
| Example 5 | $(Sr_{0.82}La_{0.18})O \cdot 6.0[(Fe_{0.985}Zn_{0.015})_2O_3]$ | Production Example 2 |
| Example 6 | $SrO \cdot 5.7[Fe_2O_3]$ | Production Example 2 |

Table 1 (continued)

| Examples and Comparative Examples | Production conditions | | |
|---|---|---|---|
| | Kind and amount of growth inhibitor added (wt. %) ($SiO_2/CaCO_3$) | Current (A) | Voltage (V) |
| Example 1 | 0/0 | 800 | 3 |
| Example 2 | 0/0 | 880 | 5 |
| Example 3 | 0.5/1.0 | 740 | 2 |
| Example 4 | 0.7/1.2 | 810 | 3 |
| Example 5 | 0.2/0.5 | 910 | 8 |
| Example 6 | 0/0 | 820 | 3 |

Table 1 (continued)

| Examples and Comparative Examples | Production conditions | | |
|---|---|---|---|
| | Pressure (MPa) | Sintering temperature (°C) | Sintering time (min.) |
| Example 1 | 40 | 900 | 5 |
| Example 2 | 50 | 950 | 5 |
| Example 3 | 100 | 970 | 7 |
| Example 4 | 10 | 1,050 | 3 |
| Example 5 | 200 | 1,025 | 5 |
| Example 6 | 50 | 1,000 | 4 |

Table 2

| Examples and Comparative Examples | Properties | | |
|---|---|---|---|
| | Crystallite size (μm) | Density (kg/m$^3$) | Magnetization value (Am$^2$/kg) |
| Example 1 | 0.71 | 5,050 | 61.4 |
| Example 2 | 0.67 | 5,060 | 61.5 |
| Example 3 | 0.76 | 5,020 | 62.8 |
| Example 4 | 0.83 | 5,000 | 63.7 |
| Example 5 | 0.77 | 5,020 | 64.6 |
| Example 6 | 0.72 | 5,070 | 61.6 |

Table 2 (continued)

| Examples and Comparative Examples | Properties | |
|---|---|---|
| | Coercive force (kA/m) | Magnetic flux density (mT) |
| Example 1 | 279 | 390 |
| Example 2 | 294 | 391 |
| Example 3 | 239 | 396 |
| Example 4 | 179 | 400 |
| Example 5 | 159 | 408 |
| Example 6 | 308 | 392 |

Table 3

| Comparative Examples | Production conditions | |
|---|---|---|
| | Composition | Production method of particles |
| Comparative Example 1 | $SrO \cdot 5.4[Fe_2O_3]$ | Production Example 1 |
| Comparative Example 2 | $SrO \cdot 5.7[Fe_2O_3]$ | Production Example 2 |
| Comparative Example 3 | $SrO \cdot 5.7[Fe_2O_3]$ | Production Example 2 |

Table 3 (continued)

| Comparative Examples | Production conditions | | |
|---|---|---|---|
| | Kind and amount of growth inhibitor added (wt. %) ($SiO_2/CaCO_3$) | Current (A) | Voltage (V) |
| Comparative Example 1 | 0/0 | 750 | 3 |
| Comparative Example 2 | 0.5/1.0 | 90 | 0.8 |
| Comparative Example 3 | 0.2/0.5 | 2,050 | 11 |

Table 3 (continued)

| Comparative Examples | Production conditions | | |
|---|---|---|---|
| | Pressure (MPa) | Sintering temperature (°C) | Sintering time (min.) |
| Comparative Example 1 | 520 | 950 | 10 |
| Comparative Example 2 | 3 | 820 | 17 |
| Comparative Example 3 | 50 | 1,070 | 4 |

Table 4

| Comparative Examples | Properties | | |
|---|---|---|---|
| | Crystallite size (μm) | Density (kg/m$^3$) | Magnetization value (Am$^2$/kg) |
| Comparative Example 1 | 0.42 | 4,990 | 60.4 |
| Comparative Example 2 | 0.49 | 4,200 | 60.2 |
| Comparative Example 3 | 1.21 | 5,030 | 64.0 |

Table 4 (continued)

| Comparative Examples | Properties | |
|---|---|---|
| | Coercive force (kA/m) | Magnetic flux density (mT) |
| Comparative Example 1 | 334 | 379 |
| Comparative Example 2 | 330 | 318 |
| Comparative Example 3 | 98 | 405 |

**Claims**

1.  A process for producing a sintered magnet comprising ferrite particles with magnetoplumbite structure, comprising:

    placing said ferrite particles in a mold; and then
    supplying an electric current of 100 to 2,000 A at a voltage of 1 to 10 V to said ferrite particles under a pressure of 5 to 500 MPa at the surface of a sample compact in the mold, to sinter said ferrite particles.

2.  A process according to claim 1, wherein sintering is conducted at a temperature of 850 to 1,050°C for 1 to 15 minutes..

3.  A process according to claim 1 or 2, wherein said pressure is 10 to 200 MPa, said electric current is 500 to 1,500 A, and said voltage is 1 to 5 V.

4.  A process according to claim 1, 2 or 3, wherein said ferrite particles have an average particle diameter of 0.1 to 0.9 μm, and a composition represented by the formula:

$$SrO \cdot nFe_2O_3$$

    wherein a part of Sr may be substituted with Ba, Pb, La, Nd or Pr; a part of Fe may be substituted with Ni, Mn, Ti, Co, Zn, Al or Sn; and n is 5.5 to 6.2.

5.  A process according to any preceding claim, wherein sintering is conducted at a temperature of 875 to 1,025 °C for 1 to 10 minutes.